# EUROPÄISCHE PATENTSCHRIFT

(11) **EP 2 901 223 B1**
(45) Veröffentlichungstag und Bekanntmachung des Hinweises auf die Patenterteilung: **03.06.2020**
(21) Anmeldenummer: 13773638.5
(22) Anmeldetag: 13.09.2013
(51) Int. Cl.: G05B 19/409

(54) **TRAGEVORRICHTUNG FÜR EIN BEDIENGERÄT EINES BEDIENSYSTEMS FÜR EINE MASCHINE**
CARRYING DEVICE FOR AN OPERATING DEVICE OF AN OPERATING SYSTEM FOR A MACHINE
DISPOSITIF DE PORTAGE POUR UN DISPOSITIF DE COMMANDE UN SYSTÈME DE COMMANDE POUR UNE MACHINE

(30) Priorität: 27.09.2012 DE 102012217572
(43) Veröffentlichungstag der Anmeldung: 05.08.2015
(73) Patentinhaber: Krones AG, 93073 Neutraubling (DE)
(72) Erfinder: HAHN, Wolfgang, 93073 Neutraubling (DE); PRONOLD, Timo, 93073 Neutraubling (DE); BÖHM, Johannes, 93073 Neutraubling (DE)
(74) Vertreter: Grünecker Patent- und Rechtsanwälte PartG mbB
(86) Internationale Anmeldenummer: PCT/EP2013/068971
(87) Internationale Veröffentlichungsnummer: WO 2014/048766

(56) Entgegenhaltungen:
- EP-A1- 2 136 274
- EP-A1- 2 306 254
- EP-A2- 0 814 397
- DE-A1-102010 025 781
- GB-A- 2 204 426
- US-A1- 2007 200 722
- US-A1- 2010 264 176
- US-B2- 7 354 304

## Beschreibung

Die Erfindung betrifft ein Bediensystem für eine Maschine, insbesondere für eine Getränkeverarbeitungsmaschine, ein mobiles Bediengerät, eine Tragevorrichtung und einen Signalgeber. Üblicherweise bedient ein Benutzer bei der Wartung von Getränkeverarbeitungsanlagen die einzelnen Maschinen über ein Bediensystem. Dabei können durch das Bediensystem beispielsweise einzelne Abläufe in der Maschine ausgelöst, Parameter eingestellt und/oder Alarm- bzw. Warnsignale empfangen werden. Hierbei werden üblicherweise stationäre Bediengeräte und in zunehmenden Maße auch mobile Bediengeräte eingesetzt, wobei die mobilen Bediengeräte mit der gesamten Anlage kompatibel sind bzw. für unterschiedliche Maschinen eingesetzt werden können. Hierbei kann der Benutzer ein mobiles Bediengerät zur jeweiligen Maschine mitnehmen und kann gleichzeitig Funktionen anderer Maschinen ausführen oder überwachen. Beispielsweise legt der Benutzer im Bereich einer bestimmten Maschine das mobile Bediengerät ab und kann bei Reparaturvorgängen das Display des mobilen Bediengeräts im Auge behalten, um davon Informationen abzulesen. Ebenso kann er über das mobile Bediengerät einzelne Komponenten der Maschine steuern, um die Reparatur durchzuführen. Zusätzlich werden dem Benutzer Alarm- und Warnsignale von dieser und/oder anderen Maschinen angezeigt und er kann sich somit entscheiden, ob gegebenenfalls eine dringendere Reparatur einer anderen Maschine vorzuziehen ist.

Derartige Bediensysteme mit mobilen Bediengeräten erweisen sich in der Praxis oft als unergonomisch, da sie vom Benutzer in der Hand mitgetragen werden müssen und sich üblicherweise an der Maschine keine stabilen Ablagemöglichkeiten während der Wartung dafür finden. Nach einer Reparatur der Maschine kann darüber hinaus das mobile Bediengerät an der Maschine leicht vergessen werden und der Benutzer muss zurückgehen, um es zu holen. Auch werden die Alarm- und/oder Warnsignale vom Benutzer leicht überhört, da er sich während der Wartung beispielsweise in einem Innenbereich der Maschine oder in einer lauten Umgebung befindet.

Beispielsweise offenbart die EP 2 306 354 A1 eine Vorrichtung zum Behandeln von Behältnissen mit einer Informationsausgabeeinheit, die über eine Befestigungseinrichtung magnetisch oder über eine Klemmverbindung an unterschiedlichen Bereichen der Vorrichtung befestigt werden kann.

Aus der US 7,345,304 B2 ist eine Tragevorrichtung für ein tragbares elektronisches Gerät bekannt mit einem Halterungselement, welches an der Kleidung befestigt werden kann, sowie mit einem Kopplungselement, welches einerseits mit dem Halterungselement lösbar gekoppelt werden kann und andererseits auf das Gerät geklebt wird. Zudem ist das Halterungselement mit dem Kopplungselement durch ein Band verbunden.

Daher ist es Aufgabe der Erfindung, ein Bediensystem für eine Maschine bereitzustellen, das in der Handhabung ergonomischer ist.

Zur Lösung dieser Aufgabenstellung stellt die Erfindung eine Tragevorrichtung mit den Merkmalen des Anspruchs 11 bereit. Vorteilhafte Weiterbildungen der Erfindung sind in den Unteransprüchen genannt.

Dadurch, dass das Bediengerät ein Kopplungselement zur Befestigung an der Maschine und/oder an der Tragevorrichtung umfasst, kann es vom Benutzer einerseits beim Tragen an der Aufnahme der Tragevorrichtung befestigt werden und gleichzeitig beim Warten an der Maschine. Somit muss der Benutzer das Bediengerät weder bei der Wartung noch beim Tragen zur nächsten Maschine in den Händen halten und hat diese somit frei für andere Tätigkeiten. Gleichzeitig erlaubt das Kopplungselement zur Befestigung an der Maschine eine stabile Halterung des Bediengeräts an der Maschine, während der Benutzer die Hände für eine Reparatur frei hat. Gleichzeitig kann der Benutzer, beispielsweise am Arm, einen Signalgeber tragen, der ihn über Alarm- und/oder Warnsignale vom Bediengerät informiert. Diese Alarm- und/oder Warnsignale können so vom Sender des Bediengeräts zum Empfänger des Signalgebers übertragen und dort dem Benutzer angezeigt werden. Dadurch, dass der Signalgeber direkt an einem Bekleidungsstück und/oder an einem Körperteil des Benutzers befestigt ist, werden die Alarm- und/oder die Warnsignale vom Benutzer nicht mehr übersehen. Gleichzeitig kann sich das Bediengerät auch außerhalb der Reichweite des Benutzers befinden und trotzdem werden die Alarm- und/oder die Warnsignale über den Signalgeber angezeigt. Die Tragevorrichtung erlaubt darüber hinaus einen bequemen Transport des Bediengeräts, ohne dabei den Benutzer von anderen Tätigkeiten abzuhalten.

Somit unterstützt das erfindungsgemäße Bediensystem in ergonomischer Weise den Benutzer bei der Bedienung und/oder der Wartung der Maschine.

Das Bediensystem kann für eine Anlage, insbesondere für eine Getränkeverarbeitungsanlage vorgesehen sein. Die Anlage kann mindestens eine Maschine umfassen. Die Maschine kann in einer Getränkeverarbeitungsanlage angeordnet sein. Die Maschine kann eine computerbasierte Maschinensteuerung umfassen. Die Maschine kann eine Getränkeverarbeitungsmaschine und/oder eine Behälterbehandlungsmaschine sein, die insbesondere eine Streck-BlasMaschine, ein Rinser, ein Füller, ein Verschließer, ein Etikettierer und/oder eine Verpackungsmaschine oder eine andere Getränkeverarbeitungsmaschine und/oder eine andere Behälterbehandlungsmaschine ist.

Das mobile Bediengerät kann einen Mikroprozessor, eine Tastatur und/oder ein Display umfassen, das insbesondere berührungsempfindlich ist. Ebenso kann das mobile Bediengerät einzelne Bedienknöpfe umfassen. Das mobile Bediengerät kann eine Datenschnittstelle zur Maschinensteuerung der Maschine umfassen, insbesondere eine drahtlose Datenschnittstelle. Die drahtlose Datenschnittstelle kann eine Bluetooth- oder WLAN-Schnittstelle sein. Das mobile Bediengerät kann ein Tablet-Computer oder ein Smartphone sein. Das Kopplungselement zur Befestigung an der Maschine und/oder an der Tragevorrichtung kann als zusätzliches Element auf dem Gehäuse aufgeklebt sein. Alternativ kann das Kopplungselement durch eine Befestigungshalterung an dem mobilen Bediengerät befestigt sein. Das Kopplungselement kann elektrische Verbindungsanschlüsse umfassen, mit denen Signale an die Maschine und/oder die Tragevorrichtung übertragen werden.

Der Signalgeber kann ein Armband, eine Kette zum Umhängen, eine Klammer und/oder einen Verschluss zur Befestigung an dem Bekleidungsstück und/oder an dem Körperteil des Benutzers umfassen. Der Signalgeber kann einen Mikroprozessor und/oder eine Batterie zur Energieversorgung umfassen. Die Energieversorgung kann dabei insbesondere für den Empfänger und/oder den Mikroprozessor vorgesehen sein.

Das Halterungselement der Tragevorrichtung kann als Schnalle, Klammer oder Verschluss ausgeführt sein. Das Halterungselement kann insbesondere zur Befestigung an einem Gürtel ausgeführt sein. Die Aufnahme für das Bediengerät kann eine Schutzhülle und/oder eine Tasche sein.

Bei dem Bediensystem für eine Maschine kann das Kopplungselement einen Magneten, ein ferromagnetisches Metallelement, ein Rastelement und/oder einen Klettverschluss umfassen. Dadurch kann das Bediengerät besonders einfach an der Maschine befestigt werden. Beispielsweise kann mit dem Magneten das Bediengerät direkt an einem Metallteil der Maschine befestigt werden.

Der Signalgeber kann einen Vibrator, einen akustischen und/oder einen optischen Signalgeber umfassen. Durch den Vibrator erhält der Benutzer einen Aktivierungsreiz, den er unabhängig von der Lautstärke der Umgebungen wahrnehmen kann. Gleiches kann auch durch den optischen Signalgeber erzielt werden. Darüber hinaus kann der Benutzer durch den akustischen Signalgeber auf die Alarm- und/oder die Warnsignale hingewiesen werden, falls er keinen direkten Sichtkontakt mit dem Signalgeber hat. Der Signalgeber kann unterschiedliche Alarm- und/oder Warnsignaltypen als unterschiedlich kodierte Vibrations-, Ton- und/oder Lichtsignale wiedergeben. Die unterschiedlichen Kodierungen können dabei verschiedene Intensitäten oder Rhythmen aufweisen. Der optische Signalgeber kann unterschiedliche Alarm- und/oder Warnsignaltypen mit unterschiedlichen Farben anzeigen. Der optische Signalgeber kann ein Display umfassen.

Bei dem Bediensystem kann der Sender und der Empfänger eine Funkübertragungseinheit zur Übertragung der Alarm- und/oder Warnsignale als Funksignale umfassen. Hierdurch wird eine besonders sichere und bequeme Art der Übertragung der Alarm- und/oder Warnsignale erreicht. Die Funkübertragungseinheit kann eine Bluetooth- und/oder WLAN-Übertragungseinheit umfassen. Darüber hinaus kann der Signalgeber einen Sender und das Bediengerät einen Empfänger umfassen, die insbesondere der Funkübertragungseinheit zugeordnet sind. Dadurch können mit der Funkübertragungseinheit sowohl Daten vom Bediengerät zum Signalgeber gesendet werden, als auch umgekehrt vom Signalgeber zum Bediengerät. Beispielsweise können damit Steuerkommandos vom Signalgeber an das Bediengerät übermittelt werden. Ebenso können Bestätigungssignale der Alarm- und/oder Warnsignale vom Signalgeber an das Bediengerät zurückgesendet werden. Dabei kann der Signalgeber Tasten umfassen.

Der Signalgeber kann ein Mobiltelefon sein. Dadurch wird das üblicherweise bei einem Benutzer vorhandene Mobiltelefon als Signalgeber genutzt und es muss kein gesonderter Signalgeber getragen werden. Gleichzeitig kann die Handhabung des Systems vereinfacht werden und die Anschaffung des Bediensystems ist weniger kostenintensiv. Das Mobiltelefon kann dabei einen Vibrator, einen akustischen und/oder einen optischen Signalgeber umfassen. Darüber hinaus kann das Mobiltelefon in seinem Display die zum Alarm- und/oder Warnsignal zugehörige Meldung anzeigen.

Bei der Tragevorrichtung ist die Aufnahme als Gegenkupplung für das Kopplungselement ausgebildet, wobei die Gegenkupplung mit dem Halterungselement lösbar verbunden ist, insbesondere wobei die Gegenkupplung und/oder das Halterungselement einen Magneten, ein ferromagnetisches Metallelement, ein Rastelement oder einen Klettverschluss umfasst. Damit ist es möglich, das Bediengerät über dessen Kopplungselement besonders einfach in die Gegenkupplung der Tragevorrichtung anzukoppeln. Darüber hinaus lässt sich so das Bediengerät besonders sicher an der Tragevorrichtung zum Transport haltern. Das Kopplungselement des Bediengeräts kann dabei so ausgeführt sein, dass es sich mit der Gegenkupplung und/oder der Maschine lösbar verbinden lässt. Das Kopplungselement kann dabei einen Magneten umfassen und die Gegenkupplung ein ferromagnetisches Metallelement. Diese können auch umgekehrt angeordnet sein. Durch die Magnetkraft lässt sich somit das Kopplungselement besonders leicht lösbar mit der ferromagnetischen Metallplatte in der Gegenkupplung der Tragevorrichtung verbinden.

Das mobile Bediengerät und die Tragevorrichtung können über ein Verbindungsband miteinander verbunden sein. Durch das Verbindungsband kann verhindert werden, dass das Bediengerät in der Maschine vergessen wird. Das Verbindungsband kann eine Schnur, ein flaches Band oder eine Kette sein. Das Verbindungsband kann einen Gummizug und/oder ein Spiralelement umfassen. Durch diese Anordnung kann das Bediengerät beim Tragen direkt mit der Tragevorrichtung verbunden sein und nach dem Ablösen indirekt über das Verbindungsband.

Die Gegenkupplung ist mit dem Halterungselement direkt oder indirekt über das Verbindungsband verbunden. Nach dem Tragen kann das Bediengerät somit entweder aus der Gegenkupplung gelöst werden und anschließend frei sein oder es kann zusammen mit der Gegenkupplung aus dem Halterungselement entnommen werden und über das Verbindungsband am Halterungselement gesichert bleiben. Anders ausgedrückt ist es so möglich, dass der Benutzer beim Herausnehmen des Bediengeräts entscheidet, ob es danach durch das Verbindungsband am Halterungselement gesichert bleibt oder nicht. Insbesondere kann das Bediengerät durch das Verbindungsband gegen Verlieren gesichert sein.

Eine Rückhaltnase an dem Halterungselement kann dazu ausgebildet sein, das Lösen der Gegenkupplung von dem Halterungselement entlang einer Richtung zu verhindern. Gleichzeitig kann die Gegenkupplung entlang einer anderen Richtung aus dem Halterungselement gelöst werden. Dadurch ist es besonders einfach möglich, dass die Gegenkupplung beim Abnehmen des Bediengeräts entlang einer Richtung an dem Halterungselement verbleibt und entlang einer anderen Richtung freigegeben wird.

Eine Rolle, insbesondere mit einem Federmechanismus kann dazu ausgebildet sein, das Verbindungsband auf- und abzurollen. Somit hängt das Verbindungsband nicht als lose Schlaufe herum.

Die Rolle kann an dem Halterungselement angeordnet sein. Dadurch kann die Rolle besonders platzsparend angeordnet werden.

Der Signalgeber kann in der Tragevorrichtung integriert sein. Da die Tragevorrichtung ebenfalls an einem Kleidungsstück und/oder an einem Körperteil des Benutzers befestigt ist, kann dieses zusätzlich den Signalgeber beherbergen und die Alarm- und/oder die Warnsignale an den Benutzer weitergeben. Dadurch muss der Benutzer nicht mehrere Funktionseinheiten im Bereich seines Körpers befestigen und es können durch die Integration Kosten gespart werden.

Das mobile Bediengerät für das erfindungsgemäße Bediensystem, insbesondere für eine Getränkeverarbeitungsmaschine, umfasst ein Kopplungselement zur Befestigung an der Maschine und/oder an der Tragevorrichtung und einen Sender zur Übertragung von Alarm- und/oder Warnsignalen an den Signalgeber.

Dadurch kann das mobile Bediengerät an der Maschine sowohl sicher als auch ergonomisch günstig angebracht werden. Darüber hinaus kann das Bediengerät an der Tragevorrichtung angebracht werden und ergonomisch besonders günstig getragen werden. Dadurch, dass das Bediengerät einen Sender zur Übertragung von Alarm- und/oder Warnsignalen an einen Signalgeber umfasst, können von dem Bediengerät die entsprechenden Signale an den Signalgeber gesendet werden, falls sich der Benutzer nicht in unmittelbarer Nähe des mobilen Bediengeräts befindet. Beispielsweise kann das mobile Bediengerät in einer besonders lauten Umgebung von einem Benutzer nicht mehr direkt gehört werden, aber trotzdem der Signalgeber, der sich in unmittelbarer Körpernähe befindet. Dadurch können die Alarm- und/oder Warnsignale vom Bediengerät trotzdem an den Benutzer übermittelt werden.

Das Kopplungselement kann einen Magneten, ein Rastelement und/oder ein Klettverschluss umfassen. Dadurch lässt sich das Kopplungselement besonders einfach mit der Maschine und/oder der Tragevorrichtung koppeln.

Durch das Halterungselement kann die Tragevorrichtung besonders einfach an einem Bekleidungsstück und/oder an einem Körperteil des Benutzers befestigt werden. Gleichzeitig kann die Gegenkupplung besonders einfach mit dem Kopplungselement des mobilen Bediengeräts gekoppelt werden und damit ist das Bediengerät besonders einfach tragbar. Gleichzeitig kann die Gegenkupplung auch aus dem Halterungselement herausgelöst werden und steht indirekt über das Verbindungsband mit dem Halterungselement in Verbindung. Dadurch wird vermieden, dass das mobile Bediengerät an einer Maschine vergessen wird.

Die Gegenkupplung und/oder das Halterungselement können einen Magneten, ein ferromagnetisches Metallelement, ein Rastelement und/oder einen Klettverschluss umfassen. Dadurch kann die Kopplung zwischen der Gegenkupplung und dem Halterungselement besonders einfach realisiert werden. Gleichzeitig kann die Gegenkupplung mit dem Kopplungselement des Bediengeräts besonders einfach lösbar verbunden werden.

Die Gegenkupplung kann mit dem Halterungselement direkt oder indirekt über ein Verbindungsband verbunden sein. Das Verbindungsband kann eine Schnur, ein flaches Band oder eine Kette sein. Dadurch kann vermieden werden, dass der Benutzer das an der Gegenkupplung angekoppelte Bediengerät an der Maschine vergisst.

Eine Rückhaltenase kann an dem Halterungselement dazu ausgebildet sein, das Lösen der Gegenkupplung von dem Halterungselement entlang einer Richtung zu verhindern. Dadurch kann das Herauslösen der Gegenkupplung entlang einer Richtung verhindert werden und folglich wird das Kopplungselement des Bediengeräts von der Gegenkupplung bei dieser Bewegung abgelöst. Das Bediengerät ist anschließend komplett freigegeben. In einer anderen Richtung wird das Bediengerät zusammen mit der Gegenkupplung aus dem Halterungselement herausgelöst und die Gegenkupplung kann dabei nach wie vor über das Verbindungsband mit dem Halterungselement verbunden sein. Somit kann der Benutzer wählen, ob er das Bediengerät beim Herausnehmen gegen Verlieren sichert.

Eine Rolle an dem Halterungselement kann dazu ausgebildet sein, das Verbindungsband auf- und abzurollen. Insbesondere kann die Rolle einen Federmechanismus umfassen. Somit kann das Verbindungsband besonders einfach aufgewickelt werden. Dadurch hängt das Verbindungsband nicht frei herum.

Der Signalgeber für das erfindungsgemäße Bediensystem umfasst ein Befestigungselement zur Befestigung an einem Bekleidungsstück und/oder an einem Körperteil eines Benutzers und einen Empfänger zum Empfang der Alarm- und/oder Warnsignale von dem Bediengerät für die Maschine.

Dadurch kann der Benutzer den Signalgeber in Körpernähe tragen und wird bei einem Alarm, welches das Bediengerät erhält, unmittelbar gewarnt.

Der Signalgeber kann einen Vibrator, einen akustischen und/oder einen optischen Signalgeber umfassen. Dadurch kann der Benutzer in lauten Umgebungen die Alarm- und/oder Warnsignale empfangen. Der Signalgeber kann dazu ausgebildet sein, verschiedene Alarm- und/oder Warnsignale in verschiedenen Intensitäten oder Rhythmen als Signal abzugeben, die insbesondere durch den Benutzer einstellbar sind. Der optische Signalgeber kann dazu ausgebildet sein, verschiedene Alarm- und/oder Warnsignale in verschiedenen Farben anzuzeigen.

Der Signalgeber kann ein Mobiltelefon sein. Dadurch kann ein vorhandenes Mobiltelefon für die Aufgabe als Signalgeber genutzt werden.

Der Signalgeber kann in der Tragevorrichtung integriert sein. Dadurch muss der Benutzer lediglich ein Gerät am Körper tragen und es können durch die Integration Kosten gespart werden.

Der Sender und der Empfänger können eine Funkübertragungseinrichtung zur Übertragung der Alarm- und/oder Warnsignale als Funksignale umfassen. Dadurch können die Alarm- und/oder Warnsignale besonders zuverlässig und ohne direkten Sichtkontakt übertragen werden.

Darüber hinaus kann das Bediengerät einen Empfänger und der Signalgeber einen Sender für Signale umfassen. Dadurch ist es möglich, dass der Benutzer ein Bestätigungssignal über den Signalgeber an das Bediengerät sendet. Beispielweise können hier Alarme bestätigt werden. Der Empfänger im Bediengerät und der Sender im Signalgeber können ebenso eine Funkübertragungseinheit umfassen. Die Funkübertragungseinheit kann einen Transmitter jeweils im Bediengerät und im Signalgeber umfassen.

Ebenso ist es möglich, dass das Bediengerät und/oder der Signalgeber jeweils einen Bluetooth- und/oder einen WLAN-Transmitter umfassen. Das Bediengerät und/oder der Signalgeber können so an eine bestehende Netzwerkinfrastruktur angebunden sein.

Bediensystem kann eine separate Kamera umfassen und das Bediengerät kann dazu ausgebildet sein, das Bild der separaten Kamera auf Abruf oder Anforderung durch den Benutzer auf dem Display darzustellen. Die separate Kamera kann dazu ausgebildet sein, Zustände an einzelnen Punkten der Maschine aufzunehmen. So wäre es denkbar, dass der Befüllungszustand von Preform-, Verschluss-, Etikettenbehältern oder weiteren Behältern angezeigt wird oder auch kritische Anlagenpunkte angezeigt werden, bei denen es häufiger zu Störungen oder anderen Problemen kommt. Die separate Kamera kann mobil ausgeführt sein. Dadurch kann deren Position jederzeit verändert werden.

Weitere Merkmale und Vorteile der Erfindung werden nachfolgend anhand der beispielhaften Figuren erläutert. Dabei zeigen:
- Fig. 1: eine perspektivische Darstellung eines erfindungsgemäßen Bediensystems;
- Fig. 2: eine Seitenansicht eines weiteren erfindungsgemäßen Bediensystems; und
- Fig. 3: eine Seitenansicht des erfindungsgemäße Bediensystem aus Fig. 2 bei Abnahme des Bediengeräts aus der Tragevorrichtung in verschiedenen Richtungen.

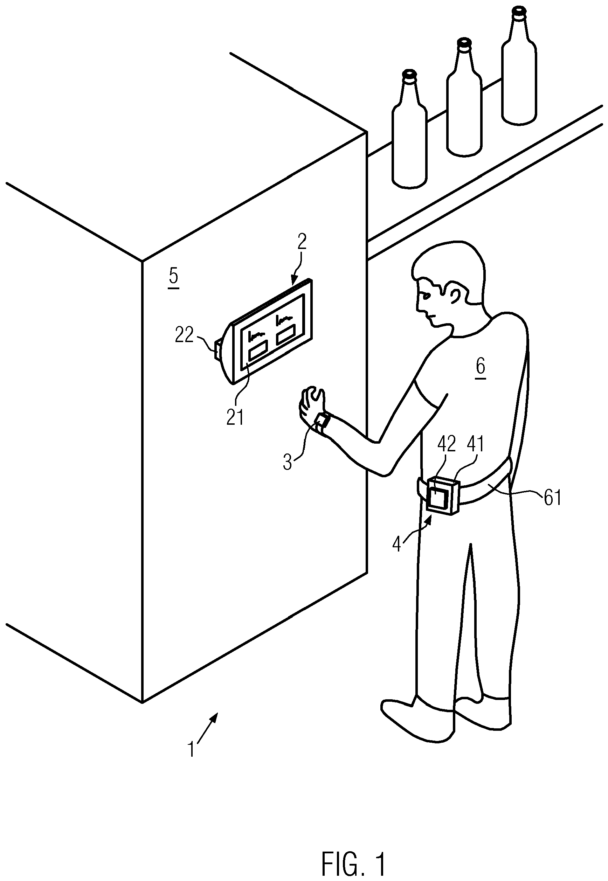

Fig. 1 zeigt eine perspektivische Darstellung eines erfindungsgemäßen Bediensystems 1. Zu sehen ist dabei, dass ein Benutzer 6 vor einer Maschine 5 zur Wartung steht. Die dargestellte Maschine 5 ist hierbei eine Getränkeverarbeitungsmaschine.

Der Benutzer 6 trägt einen Gürtel 61, an dem die Tragevorrichtung 4 befestigt ist. Dabei erfolgt die Befestigung der Tragevorrichtung 4 über das als Lasche ausgeführte Halterungselement 41, durch die der Gürtel 61 hindurch geführt ist. Zur Ankopplung des Bediengeräts 2 befindet sich an dem Halterungselement 41 die Gegenkupplung 42.

Des Weiteren ist zu sehen, dass das Bediengerät 2 an der Maschine 5 angebracht ist. Dabei dient das Kopplungselement 22 zur Anbringung des Bediengeräts 2 an der Maschine 5. Dieses Kopplungselement 22 umfasst hierbei einen Magneten, der das Bediengerät 2 besonders sicher an dem metallischen Gehäuse der Maschine 5 hält. Ebenso kann es durch den Benutzer 6 von der Maschine 5 wieder abgelöst werden. Des Weiteren umfasst das Bediengerät 2 ein berührungsempfindliches Display 21, das über eine Bediensoftware dem Benutzer 6 die Möglichkeit bietet, Eingaben an die Maschine 5 zu machen und entsprechende Meldungen anzusehen. Darüber hinaus können damit Alarm- und Wartungssignale dieser und anderer Maschinen empfangen und bestätigt werden.

Das Bediengerät 2 ist über das Kopplungselement 22 mit der Gegenkupplung 42 der Tragevorrichtung 4 koppelbar. Dazu weist die Gegenkupplung 42 eine ferromagnetische Metallplatte auf, an der der Magnet des Kopplungselements 22 besonders gut haftet. Möchte der Benutzer 6 so das Bediengerät 2 zu einer weiteren Maschine mitnehmen, so kann er das Bediengerät 2 von der Maschine 5 abziehen und an der Gegenkupplung 42 seiner Tragevorrichtung 4 anbringen. Dadurch kann der Benutzer 6 ergonomisch günstig zu der weiteren Maschine weitergehen, ohne dabei das Bediengerät 2 in den Händen halten zu müssen.

Des Weiteren trägt der Benutzer 6 am Handgelenk einen Signalgeber 3. Das Bediengerät 2 kann dabei über einen Sender die Alarm- und Warnsignale an einen Empfänger im Signalgeber 3 übertragen. Der Signalgeber 3 weist dabei einen Vibrator auf, der ein Rüttelsignal auf das Handgelenk des Benutzers 6 ausübt. Somit ist der Benutzer 6 in der Lage, Alarm- und Warnsignale von dem Bediengerät 2 zu empfangen, falls er nicht direkt auf das Display 21 des Bediengeräts 2 blicken kann. Beispielsweise kann er bei einem Wartungsvorgang innerhalb der Maschine 5 trotzdem noch die Alarm- und Warnsignale empfangen.

Mit dem in Fig. 1 dargestellten Bediensystem 1 ist es somit besonders ergonomisch möglich, Maschinen 5 zu warten, da sich das Bediengerät 2 sowohl an der Maschine 5 als auch an der Tragevorrichtung 4 anbringen lässt. Gleichzeitig hat der Benutzer 6 die Hände frei, um die Maschine 5 zu warten. Darüber hinaus wird er von dem Signalgeber 3 über wichtige Ereignisse informiert. Ebenso gibt der Signalgeber 3 ein Warnsignal ab, falls der Benutzer 6 das Bediengerät 2 an der Maschine 5 vergisst. Somit muss der Benutzer nicht einen weiten Weg zurücklegen, um das vergessene Bediengerät 2 wieder aufzunehmen.

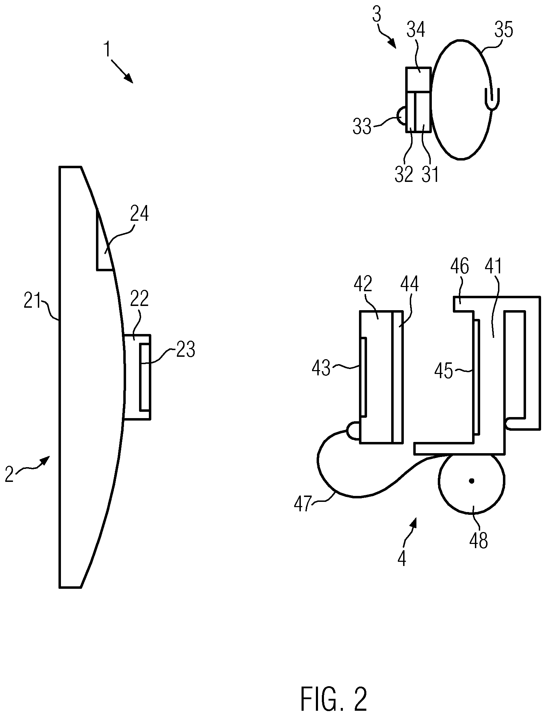

Fig. 2 zeigt eine Seitenansicht eines weiteren erfindungemäßen Bediensystems 1. Zu sehen ist das Bediengerät 2, das über das Kopplungselement 22 sowohl an einer Maschine (hier nicht dargestellt) angebracht werden kann, als auch an der Tragevorrichtung 4. Die Tragevorrichtung 4 ist dabei so ausgeführt, dass sie mit dem Halterungselement 41 an einem Gürtel eines Benutzers (hier ebenfalls nicht dargestellt) angebracht werden kann. Ebenso ist der Signalgeber 3 gezeigt, mit dem Alarm- und Warnsignale vom Bediengerät 2 an den Benutzer signalisiert werden können. Der Signalgeber 3 kann dabei am Handgelenk des Benutzers angebracht werden.

Das Bediengerät 2 umfasst ein berührungsempfindliches Display 21, an dem der Benutzer sowohl Meldungen ablesen, als auch Kommandos eingeben kann. Das Bediengerät 2 ist dabei über eine Funkschnittstelle mit der Maschine verbunden, insbesondere umfasst die Funkschnittstelle dabei eine Datenschnittstelle zwischen dem Bediengerät 2 und einer Maschinensteuerung. Zu sehen ist ebenfalls, dass das Bediengerät 2 einen Sender 24 umfasst, der Teil einer Funkübertragungseinrichtung ist. Dadurch ist es möglich, dass das Bediengerät 2 Alarm- und Warnsignale als Funksignale aussendet. Darüber hinaus befindet sich auf der Rückseite des Bediengeräts ein Kopplungselement 22 mit einem ersten Magneten 23. Alternativ kann dies auch ein Klettverschluss sein.

Über das Kopplungselement 22 und den ersten Magneten 23 kann das Bediengerät 2 an die Gegenkupplung 42 der Tragevorrichtung 4 angekoppelt werden. Darüber hinaus kann das Bediengerät 2 damit auch an ferromagnetischen Metallteilen der Maschine angebracht werden.

Die Gegenkupplung 42 umfasst auf Seiten des Bediengeräts eine ferromagnetische Metallplatte 43, an dem der erste Magnet 23 besonders gut haftet. Auf der anderen Seite weist die Gegenkupplung 42 ihrerseits auch einen zweiten Magneten 44 auf, mit dem die Gegenkupplung 42 an dem Halterungselement 41 befestigt werden kann. Dazu enthält das Halterungselement 41 ebenso eine ferromagnetische Metallplatte 45, an dem der zweite Magnet 44 besonders gut haftet und wieder abgelöst werden kann. Ebenso ist auch auf der anderen Seite des Halterungselements 41 ein Haken zu sehen, mit dem das Halterungselement am Gürtel des Benutzers eingehakt werden kann.

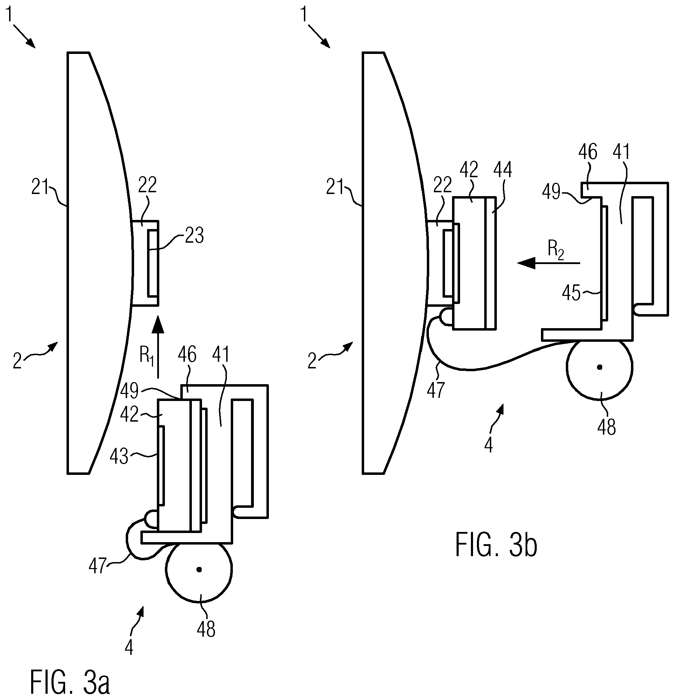

Darüber hinaus ist die Gegenkupplung 42 mit dem Halterungselement 41 über ein Verbindungsband 47 verbunden. Dieses Verbindungsband 47 kann mit einer Rolle 48 automatisch aufgerollt werden, wobei die Rolle 48 einen Federmechanismus aufweist. Darüber hinaus weist die Rolle 48 eine Bremse auf, die über Ziehen des Verbindungsbandes 47 aktiviert und wieder gelöst werden kann. Dadurch kann das Verbindungsband 47 in einer bestimmten, geeigneten Länge gehalten werden. Darüber hinaus umfasst das Halterungselement 41 eine Rückhaltnase 46. Diese wird anhand der Fig. 3A und 3B weiter unten näher erklärt.

Der Signalgeber 3 kann über die Verbindungsschlaufe 35 am Handgelenk des Benutzers angebracht werden. Die Verbindungsschlaufe 35 umfasst hierbei einen Schließmechanismus. Darüber hinaus umfasst der Signalgeber 3 einen Empfänger 34 für die Alarm- und Warnsignale vom Bediengerät 2. Dieser ist als Funkempfänger ausgebildet und ist Teil der Funkübertragungseinheit. Der Empfänger 34 kann dabei die per Funk gesendeten Signale des Bediengeräts 2 empfangen und interpretieren. Des Weiteren umfasst der Signalgeber 3 einen Vibrator 31, einen akustischen Signalgeber 32 und einen optischen Signalgeber 33. Hierdurch können die Alarm- und Warnsignale als besonders breites Spektrum von Aktivierungsreizen an den Benutzer weitergegeben werden. Es ist jedoch auch möglich, dass der Signalgeber 3 nur eine der drei vorgenannten Möglichkeiten aufweist. Der Signalgeber 3 ist dabei besonders leicht und ergonomisch gebaut. Darüber hinaus enthält der Signalgeber 3 eine Batterie und einen Mikroprozessor zur Verarbeitung der Alarm- und Warnsignale.

In Fig. 3A und 3B ist das Bediensystem 1 aus Fig. 2 zu sehen, wobei das Bediengerät 2 in zwei unterschiedlichen Richtungen R₁, R₂ von der Tragevorrichtung 4 abgenommen wird.

In Fig. 3A ist dabei zu sehen, wie das Bediengerät 2 in einer Richtung R₁ von der Tragevorrichtung 4 abgenommen wird. Dabei ist die Richtung R₁ weitestgehend senkrecht zu einer planen Haltefläche 49 der Rückhaltenase 46 bzw. parallel zur Oberfläche des Kopplungselements 22, insbesondere zum Magneten 23. Dadurch, dass die Rückhaltenase 46 die Gegenkupplung 42 in ihrer Bewegung blockiert, verbleibt die Gegenkupplung 42 in dem Halterungselement 41. Somit wird der Magnet 23 von der entsprechenden Gegenplatte 43 in der Gegenkupplung 42 abgeschert. Gleichzeitig verbleibt das Verbindungsband 47 in der Rolle 48. Folglich ist das Bediengerät 2 vollständig aus der Tragevorrichtung 4 freigegeben und kann nun vom Benutzer frei an der Maschine platziert werden.

Dem gegenüber ist in Fig. 3B zu sehen, dass das Bediengerät 2 in einer Richtung R₂ aus der Tragevorrichtung 4 herausgenommen wird. Dabei ist die Richtung R₂ im Wesentlichen parallel zu der planen Haltefläche 49 der Rückhaltenase 46. Somit kann die Rückhaltenase 46 die Gegenkupplung 42 nicht im Halterungselement 41 halten und der Magnet 44 löst sich von der entsprechenden Gegenplatte 45 des Halterungselements 41 ab. Dabei bleibt das Bediengerät 2 über die Gegenkupplung 42 und das Verbindungsband 47 mit dem Halterungselement 41 verbunden. Das Bediengerät 2 ist somit gegen Verlieren gesichert. Zusätzlich spult sich das Verbindungsband 47 aus der Rolle 48 ab, damit es keine Laschen bildet, die sich verhaken können.

Die Ausführungen der Tragevorrichtung 4 für das Bediensystem 1 in den Fig. 2, 3A und 3B erlaubt es somit dem Benutzer, frei zu entscheiden, ob er das Bediengerät 2 mit oder ohne Sicherung durch das Verbindungsband 47 aus der Tragevorrichtung 4 entnimmt.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind.

## Patentansprüche

1. Bediensystem (1) für eine Maschine (5), insbesondere für eine Getränkeverarbeitungsmaschine, umfassend
ein mobiles Bediengerät (2) für die Maschine (5),
einen Signalgeber (3) zur Meldung von Alarm- und/oder Warnsignalen, und
eine Tragevorrichtung (4) für das Bediengerät (2) gemäß Anspruch 11, wobei das Bediengerät (2)
ein Kopplungselement (22) zur Befestigung an der Maschine (5) und/oder an der Tragevorrichtung (4) und
einen Sender (24) zur Übertragung von Alarm- und/oder Warnsignalen umfasst, wobei der Signalgeber (3)
ein Befestigungselement (35) zur Befestigung an einem Bekleidungsstück und/oder an einem Körperteil eines Benutzers (6) und
einen Empfänger (34) für die Alarm- und/oder die Warnsignale umfasst, und
wobei insbesondere die Gegenkupplung (42) und/oder das Halterungselement (41)
der Tragevorrichtung (4) einen Magneten (44), ein ferromagnetisches Metallelement, ein Rastelement oder einen Klettverschluss umfasst.

2. Bediensystem (1) für eine Maschine (5) nach Anspruch 1, wobei das Kopplungselement (22) einen Magneten (23), ein ferromagnetisches Metallelement, ein Rastelement und/oder einen Klettverschluss umfasst.

3. Bediensystem (1) für eine Maschine (5) nach Anspruch 1 oder 2, wobei der Signalgeber (3) einen Vibrator (31), einen akustischen (32) und/oder optischen Signalgeber (33) umfasst.

4. Bediensystem (1) für eine Maschine (5) nach wenigstens einem der vorangegangenen Ansprüche, wobei der Sender (24) und der Empfänger (34) eine Funkübertragungseinheit zur Übertragung der Alarm- und/oder Warnsignale als Funksignale umfassen.

5. Bediensystem (1) für eine Maschine (5) nach wenigstens einem der vorangegangenen Ansprüche, wobei der Signalgeber (3) ein Mobiltelefon ist.

6. Bediensystem (1) für eine Maschine (5) nach wenigstens einem der vorangegangenen Ansprüche, wobei das mobile Bediengerät (2) und die Tragevorrichtung (4) über das Verbindungsband (47) miteinander verbunden sind.

7. Bediensystem (1) für eine Maschine (5) nach wenigstens einem der vorangegangenen Ansprüche, wobei eine Rückhaltenase (46) an dem Halterungselement (41) dazu ausgebildet ist, das Lösen der Gegenkupplung (42) von dem Halterungselement (41) entlang einer Richtung (R₁) zu verhindern.

8. Bediensystem (1) für eine Maschine (5) nach wenigstens einem der vorangegangenen Ansprüche, wobei eine Rolle (48), insbesondere mit einem Federmechanismus, dazu ausgebildet ist, das Verbindungsband (47) auf- und abzurollen.

9. Bediensystem (1) für eine Maschine (5) nach Anspruch 8, wobei die Rolle (48) an dem Halterungselement (41) angeordnet ist.

10. Bediensystem (1) nach einem der vorangegangenen Ansprüche, wobei der Signalgeber (3) in der Tragevorrichtung (4) integriert ist.

11. Tragevorrichtung (4) für ein mobiles Bediengerät (2), wobei ein Halterungselement (41) zur Befestigung an einem Bekleidungsstück (61) und/oder an einem Körperteil eines Benutzers (6) vorgesehen ist, wobei eine Gegenkupplung (42) mit dem Halterungselement (41) lösbar verbunden ist und mit einem Kopplungselement (22) des mobilen Bediengeräts (2) lösbar koppelbar ist und wobei die Gegenkupplung (42) mit dem Halterungselement (41) zusätzlich direkt oder indirekt über ein Verbindungsband (47) verbunden ist.

## Claims

1. An operator system (1) for a machine (5), in particular for a beverage processing machine, comprising
a mobile operator device (2) for the machine (5),
a signal emitter (3) for reporting alarm and/or warning signals, and
a carrying device (4) for the operator device (2) according to claim 11,
wherein the operator device (2) comprises
a coupling element (22) for attaching to the machine (5) and/or to the carrying device (4) and
a transmitter (24) for transmitting alarm and/or warning signals,
wherein the signal emitter (3) comprises
an attachment element (35) for attaching to an article of clothing and/or to a body part of a user (6) and
a receiver (34) for the alarm and/or warning signals, and
wherein, in particular, said mating coupling (42) and/or said mounting element (41) of said carrying device (4) comprise a magnet (44), a ferromagnetic metal element, a locking element or a Velcro fastener.

2. The operator system (1) for a machine (5) according to claim 1, wherein the coupling element (22) comprises a magnet (23), a ferromagnetic metal element, a locking element and/or a Velcro fastener.

3. The operator system (1) for a machine (5) according to claim 1 or 2, wherein the signal emitter (3) comprises a vibrator (31), an acoustic signal emitter (32) and/or an optical signal emitter (33).

4. The operator system (1) for a machine (5) according to at least one of the preceding claims, wherein the transmitter (24) and the receiver (34) comprise a wireless transmission unit for transmitting the alarm and/or warning signals as radio signals.

5. The operator system (1) for a machine (5) according to at least one of the preceding claims, wherein the signal emitter (3) is a mobile phone.

6. The operator system (1) for a machine (5) according to at least one of the preceding claims, wherein the mobile operator device (2) and the carrying device (4) are connected to one another via a connection band (47).

7. The operator system (1) for a machine (5) according to at least one of the preceding claims, wherein a retaining projection (46) on the mounting element (41) is configured to prevent disengagement of the mating coupling (42) from the mounting element (41) along a direction (R₁).

8. The operator system (1) for a machine (5) according to at least one of the preceding claims, wherein a roll (48), in particular with a spring mechanism, is configured to wind and unwind the connection band (47).

9. The operator system (1) for a machine (5) according to claim 8, wherein the roll (48) is arranged on the mounting element (41).

10. The operator system (1) according to at least one of the preceding claims, wherein the signal emitter (3) is integrated in the carrying device (4).

11. A carrying device (4) for a mobile operator device (2), wherein a mounting element (41) for attaching to an article of clothing (61) and/or to a body part of a user (6) is provided, wherein a mating coupling (42) is releasably connected to the mounting element (41) and adapted to be releasably coupled to a coupling element (22) of the mobile operator device (2), and wherein additionally the mating coupling (42) is directly or indirectly connected to the mounting element (41) via a connection band (47).

## Revendications

1. Système de commande (1) pour une machine (5), en particulier pour une machine de traitement de boissons, comprenant:
un dispositif de commande mobile (2) pour la machine (5),
un générateur de signaux (3) pour la signalisation des signaux d'alarme et/ou d'avertissement, et
un dispositif de portage (4) pour le dispositif de commande (2) selon la revendication 11,
par lequel le dispositif de commande (2) comprend
un élément d'accouplement (22) pour la fixation à la machine (5) et/ou au dispositif de portage (4) et
un émetteur (24) pour la transmission de signaux d'alarme et/ou d'avertissement,
dans lequel l'émetteur de signaux (3) comprend
un élément de fixation (35) pour la fixation à un vêtement et/ou à une partie du corps d'un utilisateur (6), et
un récepteur (34) pour les signaux d'alarme et/ou d'avertissement, et
dans lequel en particulier le contre-raccord (42) et/ou l'élément de retenue (41) du dispositif de portage (4) comprend un aimant (44), un élément métallique ferromagnétique, un élément d'encliquetage ou une fermeture Velcro.

2. Système de commande (1) pour une machine (5) selon la revendication 1, dans lequel l'élément d'accouplement (22) comprend un aimant (23), un élément métallique ferromagnétique, un élément d'arrêt et/ou une fermeture Velcro.

3. Système de commande (1) pour une machine (5) selon la revendication 1 ou 2, dans lequel l'émetteur de signaux (3) comprend un vibreur (31), un émetteur de signaux acoustique (32) et/ou optique (33).

4. Système de commande (1) pour une machine (5) selon au moins une des revendications précédentes, l'émetteur (24) et le récepteur (34) comprenant une unité de transmission radio pour la transmission des signaux d'alarme et/ou d'avertissement sous forme de signaux radio.

5. Système de commande (1) pour une machine (5) selon au moins une des revendications précédentes, dans lequel l'émetteur de signaux (3) est un téléphone mobile.

6. Système de commande (1) pour une machine (5) selon au moins une des exigences précédentes, le dispositif de commande mobile (2) et le dispositif de portage (4) étant reliés entre eux par la bande de liaison (47).

7. Système de commande (1) pour une machine (5) selon au moins une des revendications précédentes, dans lequel une patte de retenue (46) sur l'élément de retenue (41) est formée pour empêcher la libération du contre-raccord (42) de l'élément de retenue (41) le long d'une direction (R₁).

8. Système de commande (1) pour une machine (5) selon au moins une des revendications précédentes, dans lequel un rouleau (48), en particulier avec un mécanisme à ressort, est formé pour enrouler et dérouler la courroie de liaison (47).

9. Système de commande (1) pour une machine (5) selon la revendication 8, dans lequel le rouleau (48) est disposé sur l'élément de retenue (41).

10. Système de commande (1) selon l'une des revendications précédentes, dans lequel l'émetteur de signaux (3) est intégré dans le dispositif de transport (4).

11. Dispositif de transport (4) pour appareil de commande mobile (2), dans lequel un élément de retenue (41) est prévu pour être fixé à un vêtement (61) et/ou à une partie du corps d'un utilisateur (6), dans lequel un contre-raccord (42) est relié de manière amovible à l'élément de retenue (41) et peut être couplé de manière amovible à un élément d'accouplement (22) du dispositif d'actionnement mobile (2), et dans lequel le contre-raccord (42) est en outre relié à l'élément de retenue (41) directement ou indirectement par l'intermédiaire d'une sangle de liaison (47).
